# EUROPÄISCHE PATENTSCHRIFT

(11) **EP 2 795 008 B1**
(45) Veröffentlichungstag und Bekanntmachung des Hinweises auf die Patenterteilung: **11.04.2018**
(21) Anmeldenummer: 12812623.2
(22) Anmeldetag: 20.12.2012
(51) Int. Cl.: E04B 1/26, F16B 43/02

(54) **VERBINDUNG VON MINDESTENS EINEM BAUTEIL AUS STAHL MIT EINEM UNTERBAU AUS SPRÖDEM MATERIAL**
JOINT BETWEEN A STEEL STRUCTURE AND A SUBSTRUCTURE OF BRITTLE MATERIAL
JOINT ENTRE UNE STRUCTURE EN ACIER ET UNE SUBSTRUCTURE EN MATIERE CASSANT

(30) Priorität: 23.12.2011 DE 102011057014
(43) Veröffentlichungstag der Anmeldung: 29.10.2014
(73) Patentinhaber: SFS Intec Holding AG, 9435 Heerbrugg (CH)
(72) Erfinder: PALM, Erich, CH-9434 Au (CH); HORN, Nils, CH-9445 Rebstein (CH)
(86) Internationale Anmeldenummer: PCT/EP2012/076317
(87) Internationale Veröffentlichungsnummer: WO 2013/092822

(56) Entgegenhaltungen:
- WO-A1-2008/000668
- DE-A1-102009 037 820
- DE-U1- 8 914 213
- DE-U1-202008 017 215
- US-A- 3 174 386
- US-A- 4 061 073

## Beschreibung

Die Erfindung betrifft eine Verbindung von mindestens einem Bauteil aus Stahl mit einem Unterbau aus sprödem Material nämlich Holz, gemäß dem Oberbegriff von Anspruch 1.

Es geht hier um Verbindungen in Tragwerken aus Holz, also im konstruktiven Holzbau. In Tragwerken aus Holz stellen die Verbindungen der einzelnen Tragelemente nach wie vor Schwachstellen dar, weil sie die Leistungsfähigkeit der Tragwerke begrenzen. Die Ursache dafür liegt in der Struktur des Holzes: Holz weist stark anisotrope mechanische und physikalische Eigenschaften auf. Die Festigkeit des Holzes ist parallel zur Faserrichtung hoch, nimmt aber rapide ab, wenn die Kraftrichtung schräg oder sogar rechtwinkelig zur Faserrichtung ist. Verschraubungen in einem Winkel von maximal 45 Grad zur Längsachse oder Faserrichtung werden im konstruktiven Holzbau wegen der Sprödheit des Grundmaterials Holz möglichst vermieden oder konstruktiv umgangen. Sollte eine Konstruktion nur diese Art von Verschraubung zulassen, sind sehr aufwendige Methoden für das korrekte Ausrichten und Setzen der Schraube notwendig. Dabei werden drehmomentgesteuerte Antriebsgeräte eingesetzt, die gewährleisten sollen, dass alle Schrauben der Verbindung möglichst gleichmäßig angezogen werden, um so ein hohes Tragvermögen der Verbindung zu erzielen. Aus dem Stahlbau ist bekannt, dass das Anziehen mit Drehmomentschraubern eine Streuung von +/- 25 % der Montagevorspannkraft um den Mittelwert beträgt. Dies dürfte auch für Verschraubungen in Holz gelten. Praktisch ist also nur ein äußerst ungleichmäßiges Anziehen der Schrauben möglich, selbst wenn drehmomentgesteuerte Antriebsgeräte eingesetzt werden.

Zur sicheren Übertragung besonders hoher Kräfte bei Verschraubungen von Montageblechen auf Holzwerkstoffen hat die Firma Würth eine 45 Grad Winkelscheibe entwickelt (dargestellt und beschrieben in dem Prospekt "Neue 45 Grad Winkelscheibe zur Befestigung von Metallzuglaschen im Holzbau (http://www.forumholzbau.com/pdf_11/nl57_wuerth.pdf)". Diese Winkelscheibe soll in Verbindung mit einer Vollgewindeschraube ein Höchstmaß an Sicherheit gewährleisten. Durch einen Einschraubwinkel von 45 Grad erreiche die Scheibe im Vergleich zu konventionellen Systemen eine rund doppelt so hohe Belastbarkeit der Schraubenverbindung. Herkömmliche Verschraubungen mit senkrecht im Untergrund stehenden Schrauben würden üblicherweise auf Scherung beansprucht. Die zulässige Scherbeanspruchung einer Schraube sei aber in der Regel deutlich kleiner als deren zulässige Zugbeanspruchung. In diesem Fall werde die übertragbare Kraft durch die verhältnismäßig niedrige zulässige Scherbeanspruchung eingeschränkt. Bringe man dagegen die Schraube in einem möglichst flachen Winkel, bezogen auf die Faserrichtung des Holzes, in den Unterbau ein, ändere sich deren Beanspruchung in eine Kombination aus Zug- und Scherung. Da für die Zugbeanspruchung höhere zulässige Werte gelten, könnten dann entsprechend größere Kräfte übertragen werden. Die Winkelscheibe 45 Grad gewährleiste einen Einschraubwinkel von 45 Grad und damit die leistungsfähigere Zug-Scher-Beanspruchung. Außerdem wirke die Scheibe als Puffer zwischen Montageblech und Schraubenkopf und verhindere dadurch, dass der Schraubenkopf bei dünnen Blechstärken durch die Bohrung hindurchgezogen werde.

Die DE 10 2009 037 820 A1 betrifft eine Anordnung zur Verbindung von Holzbauteilen. Zur Befestigung von in einer Richtung parallel zu einer Oberfläche auf Zug beanspruchten Metallstreifen oder Metallblechen an einem Holzbalken oder dergleichen wird ein Unterlegelement vorgeschlagen, das eine zur Auflage an der Oberfläche des Metallstreifens oder Metallblechs bestimmte Anlagefläche und einen schräg zu dieser Anlagefläche verlaufenden Durchgang für eine Schraube aufweist. In der Anlagefläche des Unterlegelements ist ein Eingriffsansatz angeordnet, der über die Anlagefläche vorspringt und allseits von der Anlagefläche umgeben ist. Mit diesem Eingriffsansatz wird das Unterlegelement in ein Loch, beispielsweise ein gebohrtes Loch, des Metallblechs oder Metallstreifens eingesetzt. Die auf den Metallstreifen wirkenden Kräfte werden durch das Unterlegelement auf die Längsrichtung des Durchgangs und damit der durch den Durchgang hindurch geschraubten Schraube oder durch den Durchgang hindurch genagelten Nagels umlenkt. Das Unterlegelement wirkt ähnlich wie eine Unterlegscheibe, nur mit einem schräg verlaufenden Durchgang. Der Durchgang braucht auch nicht vollständig geschlossen zu sein.

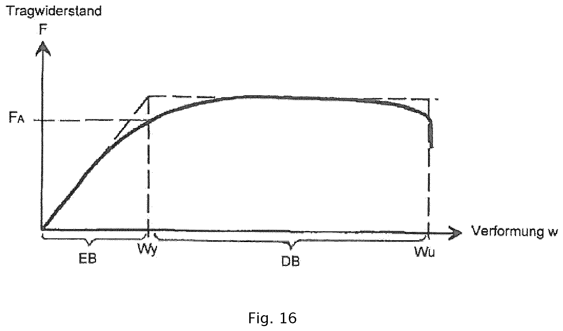

Auf das Gesamtverhalten eines Tragwerkes hat aber nicht nur das Tragvermögen oder der Tragwiderstand Einfluss, sondern erforderlich sind auch eine ausreichende Steifigkeit und ein bestimmtes Maß an Duktilität. Die Duktilität ist in der hier beigefügten Fig. 16 definiert, welche ein Diagramm zeigt, in dem der Tragwiderstand F über der Verformung w aufgetragen ist.

Die Duktilität wurde früher als Arbeitsvermögen ausgedrückt. Die Anforderung an Verbindungen wurde beschrieben von Gehri *(Gehri, E. 1993: Grundlagen der Verbindungstechnik in Holzwerkstoffen auf Furnierbasis, Schweiz, Arbeitsgemeinschaft für Holzforschung, Lignum, Zürich, 1993).* Nach Gehri sind Verbindungsarten mit großem Arbeitsvermögen - bei gleicher Tragfähigkeit - vorzuziehen. Ein großes Arbeitsvermögen bedeute eine zusätzliche Sicherung gegen Versagen der Verbindung bei allfälligen Überlastungen. In Folge der innerlich hochgradig statischen Unbestimmtheit der Holzfachwerke sei bei genügendem Arbeitsvermögen der Verbindungen meist noch eine gewisse Kräfteumlagerung möglich. Gehri hat dazu das Arbeitsvermögen von verschiedenen Verbindungen dargestellt, nämlich für eine Keilzinkenverbindung, eine Bolzenverbindung und eine Bolzenverbindung mit auf maximales Arbeitsvermögen abgestimmten Abmessungen.

Die hier beigefügte Fig. 16 zeigt das Kraft/Weg- oder Tragwiderstand/Verformung-Verhalten einer Verbindung, wobei w_{y} die elastische Verformung bezeichnet und wᵤ die Bruchverformung. Zwischen Null und w_{y} liegt ein elastischer Bereich, der mit EB bezeichnet ist. Zwischen w_{y} und wᵤ liegt ein plastischer oder duktiler Bereich, der mit DB bezeichnet ist.

Nach Gehri hat die Duktilität einer Verbindung entscheidenden Einfluss auf das Gesamtverhalten eines Tragwerkes, was er wie folgt begründet.

Der Baustoff Holz weise insbesondere bei Zugbeanspruchung ein sehr sprödes Verhalten auf. Ein duktiles Verhalten eines Tragwerkes lasse sich somit nur in der Verbindung selber erzielen, wenn diese entsprechend ausgelegt werde. Aber selbst wenn durch die duktile Auslegung die Tragfähigkeit der einzelnen Verbindung verringert werde, steige in der Regel die Belastbarkeit des Gesamttragwerkes.

Weiter hat nach Gehri die Duktilität Einfluss auf das Tragverhalten einer Verbindung.

Die maximale Tragfähigkeit einer Bolzen- oder Schraubenverbindung werde erreicht, wenn die Bolzen oder Schrauben bis zu ihrem plastischen Tragvermögen belastet werden. Dies setze aber größere elastische und plastische Verformungen des Bolzens oder der Schraube voraus. Die ganze Verbindung müsse somit vor dem Versagen genügend große Verformungen erlauben. Versage sie aber vorher, beispielsweise durch Aufspalten des Holzes, so könne das plastische Tragvermögen nicht erzielt werden.

Weiter habe die Duktilität Einfluss auf das Tragverhalten einer Gruppe von Verbindungsmitteln.

Im Holzbau besteht eine mechanische Verbindung in der Regel aus mehreren Verbindungsmitteln. Für das Tragvermögen der Verbindung ist entscheidend, wie weit die Tragfähigkeiten der einzelnen Verbindungsmittel summiert werden können.

Das sehr spröde Verhalten von Holz (besonders längs zur Faser) lässt keinen Ausgleich der Kräfte bei Belastung zu, so dass es praktisch unmöglich ist, dass alle Befestiger in einem Verbund gleichzeitig tragen. Die Konsequenz ist somit, dass das Tragvermögen der Gruppe kleiner ist als die Summe der Tragwiderstände der einzelnen Verbindungsmittel (sogenannter Reißverschlusseffekt).

Die Forderung nach einer hohen Duktilität der Verbindung steht nicht im Widerspruch zu einer großen Steifigkeit. Der Gebrauchstauglichkeitsnachweis erfolgt auf einem Lastniveau von 20 % bis 40 % des Tragwiderstandes, also im linearen Verformungsbereich. Bei einer gegebenen Bruchverformung wᵤ wird das Duktilitätsmaß, das als wᵤ/w_{y} definiert ist, größer, wenn die elastischen Verformungen w_{y} kleiner werden.

Oben ist bereits dargelegt worden, dass im Stand der Technik Verschraubungen längs oder in einem Winkel von max. 45 Grad zur Längsachse oder Faserrichtung im konstruktiven Holzbau aufgrund der Sprödheit des Grundmaterials Holz möglichst vermieden oder konstruktiv umgangen werden. Die 45° Winkelscheibe, die oben beschrieben worden ist, erfüllt zwar den Zweck, den Einschraubwinkel einzuhalten, sie schafft aber weder ein duktiles Verhalten noch Setzsicherheit bezüglich des Anziehmoments bei dem Herstellen der Verbindung. Weiter kann sie keine Fertigungstoleranzen ausgleichen, die bei der Fertigung von Schrauben, wie sie im konstruktiven Holzbau eingesetzt werden, unvermeidlich sind.

Aus der Druckschrift DE 38 27 773 A1 ist eine Befestigungsvorrichtung für Schienen bekannt. Die Schienen werden mittels Rippenplatten auf Holzschwellen befestigt. Die Schiene wird auf den Rippenplatten jeweils durch ein Spannglied festgelegt, das aus einer Maschinenschraube und einer Mutter besteht. Zwischen dem Schraubenkopf und dem Schienenfuß sind Zwischenglieder angeordnet. Ein einmal eingestelltes Drehmoment ergibt bei dem Anziehen der Schraube eine bestimmte Verspannungskraft der Schraube. Nach einer relativ langen Liegezeit der Holzschwelle kann die erforderliche Verspannungskraft durch einfaches Nachziehen der Maschinenschraube mithilfe eines Drehmomentschlüssels wieder hergestellt werden. Es ist klar, dass bei einer solchen Befestigungsvorrichtung eine plastische Verformung des Zwischengliedes ausgeschlossen sein muss. Andernfalls ließe sich eine einmal eingestellte Verspannungskraft der Schraube nicht aufrecht erhalten. Auch bei dieser bekannten Befestigungsvorrichtung hat die Verbindung somit kein duktiles Verhalten.

Das Dokument DE 20 2008 017 215 U1 zeigt eine weitere Verbindung. Sie bedient sich eines Zwischenelementes für eine Schrägschraubverbindung.

Aufgabe der Erfindung ist es, bei einer Verbindung der eingangs genannten Art eine Qualitätssicherung hinsichtlich Anziehmoment und Eindrehwinkel zu erzielen.

Diese Aufgabe wird mit den Merkmalen des unabhängigen Anspruches 1 gelöst.

Das erfindungsgemäß zusätzlich zu der Schraube vorhandene mindestens eine Stützelement, das mit der Schraube gemeinsam die Verbindung bildet, ermöglicht eine direkte Verschraubung längs zur Faser, wenn es sich bei dem Unterbau aus sprödem Material um Holz handelt, also eine Stirnholzverschraubung, wobei die Koppeleinrichtung in Kombination mit der Schraube das spröde Verhalten der Verschraubung zunächst in ein elastisches und dann in ein duktiles Verhalten umwandelt. Im Stand der Technik wird bislang die Direktverschraubung umgangen, indem andere Konstruktionen um den Befestigungspunkt eingesetzt werden, z. B. Stabdübelverbindungen, Nagelplatten usw. Das erfindungsgemäß eingesetzte Stützelement wird nicht nur die Direktverschraubung längs zur Faser, sondern auch unter einem Winkel ermöglichen, wobei, im Gegensatz zu dem Einsatz der oben beschriebenen 45° Winkelscheibe, eine spröde Verbindung in eine duktile Verbindung umgewandelt und das Tragvermögen der Verbindung optimiert wird. Das erfindungsgemäß eingesetzte Stützelement hat die Eigenschaft, die Steifigkeit der Verbindung zwar aufrecht zu erhalten, bei Überlastung der Verbindung jedoch die Versagenskraft auf annähernd gleichem (hohem) Niveau über einen bestimmten Weg zu halten. Die im Stand der Technik sehr spröde Verbindung wird erfindungsgemäß durch Zuhilfenahme des mindestens einen Stützelements in eine Verbindung mit nahezu idealem Verhalten umgewandelt, d. h. in eine Verbindung, die ein hohes Duktilitätsmaß wᵤ/w_{y} aufweist. Darüber hinaus wird der sogenannte Reißverschlusseffekt durch Ausgleich von Überspannungen im duktilen Bereich bei mehreren die Verbindung bildenden Schrauben untereinander unterbunden, wodurch die Verbindung wieder das volle Tragvermögen erhält.

Die erfindungsgemäße Verbindung erhält durch das mindestens eine Stützelement nicht nur Duktilität, mindestens nach deren Herstellung, sondern erhöht gleichzeitig auch die Setzsicherheit bezüglich Winkel- und Anzugsmoment. Das Anzugsmoment jeder Schraube muss bei dem Herstellen der Verbindung, nämlich nicht für jede Schraube gleich groß sein, sondern kann streuen. Es muss nur gewährleistet werden, dass der Tragwiderstand bei Überlastung jeder Verbindung aus Schraube und mindestens einem Stützelement in dem in Fig. 16 angegebenen duktilen Bereich DB der Kennlinie liegt. Durch das mindestens eine Stützelement wird nicht nur die Verarbeitung einfacher, da speziell herstellungsbedingte Toleranzen beim Anzugsmoment und Einschraubwinkel kompensiert werden können, sondern die gesamte erfindungsgemäße Verbindung weist auch ein duktiles Verhalten kurz vor dem Versagensfall auf. Hinzu kommt, dass die Kopffräsung bei einem Bauteil aus Stahl für die Aufnahme des Schraubenkopfes entfallen kann oder zumindest vereinfacht wird. Ein weiterer Vorteil ist die Möglichkeit einer Optimierung (Minimierung) der Dicke des Bauteils aus Stahl, da durch das mindestens eine Stützelement die Gefahr des Kopfdurchzugs des Schraubenkopfes bei dem Bauteil aus Stahl minimiert wird.

Sind mehrere Schrauben in Kraftrichtung hintereinander angeordnet, so ergibt sich in der Verbindung insbesondere durch Herstellungstoleranzen eine ungleichmäßige Belastung der einzelnen Schrauben. Ein gewisser Ausgleich der entsprechenden unterschiedlich großen Kräfte ist möglich, weil vor dem Versagen größere plastische Verformungen möglich sind. Wegen des spröden Verhaltens des Holzes unter Zugbelastung kann ein duktiles Versagen der Verbindung einzig durch plastische Deformation der Schrauben selbst erfolgen.

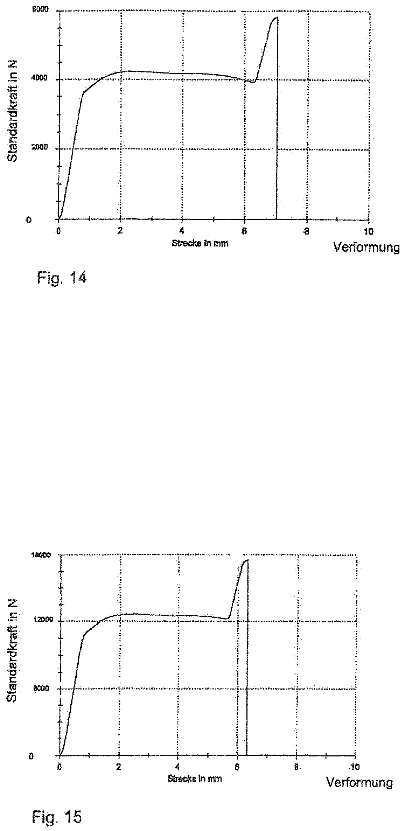

Die erfindungsgemäße Verbindung kann so gestaltet werden, dass sie bereits bei ihrer Herstellung Duktilität aufweist. Das ist der Fall einer sogenannten weichen Schraubenverbindung. Üblicherweise wird die Verbindung bei der Herstellung aber noch nicht duktil belastet. Wesentlich ist, dass die erfindungsgemäße Verbindung dabei so ausgelegt ist, dass bei Erreichen der Bruchverformung wᵤ nicht etwa das spröde Material oder Holz versagt, sondern die Schraube. Es ergibt sich erfindungsgemäß so ein Kraftverlauf, wie er in den hier beigefügten Fig. 14 und 15 gezeigt ist. Diese Versagensart hat den Vorteil, dass sie berechenbarer ist als ein Ausreißen der Verbindung zwischen dem Unterbau und der Schraube. Vorzugsweise verhält sich die Verbindung nach der Erfindung aufgrund des oder jedes Stützelements steif bei geringem Lastniveau und duktil bei Überlastung oder hohem Lastniveau.

Die Funktion, die das oder jedes Stützelement in der erfindungsgemäßen Verbindung zu erfüllen hat, wird über die Parameter Volumen, Material, Wanddicke, Höhe und/oder Reibbeiwert und ggf. weitere Parameter sichergestellt.

Die Vorteile der erfindungsgemäßen Verbindung sind, nochmals zusammengefasst:
- Sicherstellung eines identischen Anzugsmomentes jeder einzelnen Schraube
- steifes Verhalten bei niedrigem Lastniveau, um Verformungen innerhalb der Verbindung gering zu halten
- bei Überlastung plastische Verformung bis kurz unterhalb der Bruchlast
- Ausgleich der Fertigungstoleranzen beim Anzugsmoment
- Verringerung der Dicke des Bauteils aus Stahl
- Vorgabe und somit Sicherung des Einschraubwinkels
- Wegfall der Kopffräsung im anzuschließenden Bauteil aus Stahl
- Qualitätssicherung gewährleistet, und zwar auf einfachere Art und Weise
- keine Anschaffung von teureren drehmomentgesteuerten Handsetzgeräten
- einfache, konstruktive Lösung und projektunabhängig.

Bei der Verbindung sind mehrere Schrauben parallel zueinander jeweils in einer Lage und jeweils einem gleichen Winkel von bis zu 45° zur Längsachse oder, bei einem Unterbau aus Holz, zur Faserrichtung und/oder in einer dazu gespiegelten Lage und so angeordnet, dass sie bei Zugbeanspruchung des Bauteils auf Zug und Scherung beansprucht sind. In dieser Ausgestaltung der Verbindung nach der Erfindung sind immer mehr als eine Schraube vorhanden, die unter dem gleichen Winkel angeordnet sind. Besteht der Unterbau aber z. B. aus zwei stirnseitig aneinander anliegenden Elementen, können die Winkel einer zweiten Gruppe von Schrauben in einer anderen, z. B. gespiegelten Lage angeordnet sein. Andere Kombinationsmöglichkeiten mit anderen Winkeln sind ohne weiteres möglich.

In einer weiteren Ausgestaltung der Verbindung nach der Erfindung besteht die das (oder eines der) Stützelement(e)bildende Hülse aus einer Aluminium- oder Aluminiummagnesiumlegierung. Das für die Hülse verwendete Material hat einen großen Einfluss auf das Verhalten der Verbindung. Versuche mit einer vorbestimmten Geometrie haben gezeigt, dass das gewünschte Verhalten, d. h. der gewünschte Verlauf der Kennlinie nach der hier beigefügten Fig. 16 mit dem verwendeten Material Aluminium- oder Aluminiummagnesiumlegierung am besten erreicht werden konnte.

Vorteilhafte Ausgestaltungen der Erfindung bilden die Gegenstände der abhängigen Ansprüche.

In einer Ausgestaltung der Verbindung ist das oder jedes Stützelement weiter so ausgebildet, dass die Verbindung eine Duktilität hat, die auf einem Weg zwischen einer elastischen Verformung w_{y} und einer Bruchverformung wᵤ einen im Wesentlichen konstant bleibenden Tragwiderstand aufweist. Ermöglicht wird das dadurch, dass das (die) Stützelement(e) in den geometrischen Abmessungen, im Material und/oder im Hinblick auf andere Parameter so gestaltet werden kann (können), dass sich der in der beigefügten Fig. 16 gezeigte lineare und vor allem waagerechte Verlauf der Kennlinie des Tragwiderstandes in Abhängigkeit von der Verformung ergibt. Abweichungen von diesen Parametern führen auch zu Abweichungen in dem Kraft/Weg-Verhalten nach Fig. 16.

In einer weiteren Ausgestaltung der Verbindung ist (sind) die Schraube(n) so ausgebildet, dass sie bei dem Erreichen der Bruchverformung der Verbindung versagt (versagen). Dadurch wird verhindert, dass die Verbindung mit dem Ausreißen der Schraube(n) aus dem Unterbau versagt, wodurch sich oben im Einzelnen bereits dargelegte Vorteile durch ein definiertes und berechenbareres Versagen ergeben.

In einer weiteren Ausgestaltung der Verbindung umfasst das (oder umfassen die) Stützelement(e)eine metallische, durch Überlastung der Verbindung plastisch verformbare Hülse, auf der sich der Schraubenkopf direkt oder über eine metallische Zwischenscheibe oder -hülse abstützt. Bei dieser Art von Stützelement(en) brauchen lediglich die geometrischen Abmessungen der Hülse so gestaltet zu werden, dass sich die angestrebte Kennlinie für den Tragwiderstand in Abhängigkeit von der Verformung ergibt. Die Hülse wird zwischen den Schraubenkopf und das zu befestigende Bauteil geschaltet und mitverschraubt.

In einer weiteren Ausgestaltung der Verbindung ist der Schraubenkopf ein Senkkopf oder ein Flachkopf. Durch eine daran angepasste Ausbildung des Stützelements oder der Stützelemente, z. B. durch eine entsprechende Senkung in der Hülse, wird eine gute Kraftübertragung von der Schraube über die Hülse auf das zu befestigende Bauteil aus Stahl erzielt.

In einer weiteren Ausgestaltung der Verbindung stützt sich die Hülse in einer Senkung des Bauteils ab. Wenn das (die) Stützelement(e) wie in den beiden vorher genannten Ausgestaltungen eine metallische, durch Überlastung der Verbindung plastisch verformbare Hülse umfasst (umfassen), so lässt sich deren plastische Verformung auf das Innere der Senkung beschränken.

In einer weiteren Ausgestaltung der Verbindung ist die Hülse als eine Tellerscheibe oder andere konische Scheibe ausgebildet, die im Scheitel des Konus den Schraubenkopf aufnimmt. Auch hier kann die Anordnung wiederum so getroffen werden, dass sich die Verformung der Tellerscheibe auf die Senkung beschränkt und z. B. durch die Senkung begrenzt wird. Die Tellerscheibe kann dabei in Draufsicht kreisförmig oder rechteckig sein.

In einer weiteren Ausgestaltung der Verbindung ist die Zwischenhülse so ausgebildet, dass durch Anziehen der Schraube und durch Überlastung der Verbindung die Zwischenhülse in die Hülse einsenkbar und die Hülse dadurch aufweitbar oder zerspanbar ist. Die Zwischenhülse kann wie eine Art Räumnadel wirken, welche durch Zerspanen der Hülse der Verbindung die gewünschte Duktilität verleiht.

In einer weiteren Ausgestaltung der Verbindung, die nicht unter den Wortlaut von Anspruch 1 fällt, ist das (oder sind die) Stützelement(e) gebildet durch einen gewindefreien Schaftabschnitt unterhalb des Kopfes und eine Durchgangsbohrung des Bauteils, in der der gewindefreie Schaftabschnitt wenigstens mit einem Teil seiner Länge und mit einer Presspassung angeordnet ist. Die Presspassung ist auf einfache Weise erzielbar, indem der Durchmesser des gewindefreien Schaftabschnittes in Bezug auf den Durchmesser der Durchgangsbohrung des zu befestigenden Bauteils entsprechend gewählt wird. Weiter kann der Reibbeiwert des gewindefreien Schaftabschnittes stattdessen oder zusätzlich so gewählt werden, dass die Verbindung bei Überlastung die gewünschte Duktilität aufweist.

In einer weiteren Ausgestaltung der Verbindung, die nicht unter den Wortlaut von Anspruch 1 fällt, ist das (oder sind die) Stützelement(e) gebildet durch eine unterhalb des Kopfes um den Schaft angeordnete metallische Büchse und durch eine Durchgangsbohrung des Bauteils, in der die Büchse wenigstens mit einem Teil ihrer Länge und mit einer Presspassung angeordnet ist. Diese Ausgestaltung bietet die gleichen Vorteile wie die vorhergehend beschriebene Ausgestaltung, nur mit dem Unterschied, dass statt eines gewindefreien Schaftabschnittes mit einem im Wesentlichen dem Durchmesser der Durchgangsbohrung entsprechenden Durchmesser eine normale Schraube ohne Verdickung unterhalb des Kopfes gewählt werden kann, die einfach zusammen mit der metallischen Büchse eingeschraubt wird.

In einer weiteren Ausgestaltung der Verbindung ist das spröde Material Holz und das Gewinde ist ein Holzschraubengewinde. Das gewährleistet das Erzielen bester Ergebnisse, wenn der Unterbau aus Holz besteht.

Ausführungsbeispiele der Erfindung werden im Folgenden unter Bezugnahme auf die Zeichnungen näher beschrieben.

Es zeigt:
- Fig. 1: in einer Längsschnittansicht ein Ausführungsbeispiel der Erfindung, bei dem zwei Bauteile aus Stahl mit einem Unterbau aus Holz mit sich in Längsrichtung erstreckender Faserrichtung zwei erfindungsgemäße Verbindungen aus jeweils drei Schrauben haben.
- Fig. 2: eine Verbindung, bei dem sich der Schraubenkopf über eine metallische Zwischenscheibe und eine metallische Hülse auf dem Bauteil abstützt,
- Fig. 3a: eine Verbindung, die dem Ausführungsbeispiel nach Fig. 2 gleicht, wobei sich aber die Hülse in einer Senke des Bauteils abstützt, und zwar vor der Herstellung der Verbindung,
- Fig. 3b: das Ausführungsbeispiel nach Fig. 3a, jedoch nach der Herstellung der Verbindung,
- Fig. 4: ein Ausführungsbeispiel einer Verbindung.
- Fig. 5: ein Ausführungsbeispiel einer Verbindung,
- Fig. 6: ein Ausführungsbeispiel einer Verbindung,
- Fig. 7: ein Ausführungsbeispiel einer Verbindung,
- Fig. 8: ein Ausführungsbeispiel einer Verbindung,
- Fig. 9: ein Ausführungsbeispiel einer Verbindung in Längsschnittansicht,
- Fig. 10: das Ausführungsbeispiel nach Fig. 9, aber in einer Draufsicht,
- Fig. 11: ein Ausführungsbeispiel einer Verbindung,
- Fig. 12a: in einer Längsschnittansicht ein Ausführungsbeispiel einer Verbindung, und zwar vor dem Herstellen der Verbindung,
- Fig. 12b: das Ausführungsbeispiel nach Fig. 12a, aber nach dem Herstellen der Verbindung,
- Fig. 13a: ein Ausführungsbeispiel einer Verbindung,
- Fig. 13b: ein Ausführungsbeispiel einer Verbindung,
- Fig. 14: ein Diagramm, in welchem der Verlauf einer Kraft über einem Weg dargestellt ist, und zwar für Einzelbefestigung, also eine Verbindung mit einer Schraube,
- Fig. 15: ein Diagramm, in welchem der Verlauf einer Kraft über einem Weg dargestellt ist, und zwar für Dreifach-Befestigung, also eine Verbindung mit drei Schrauben, und
- Fig. 16: ein Diagramm zur Erläuterung der Duktilität.

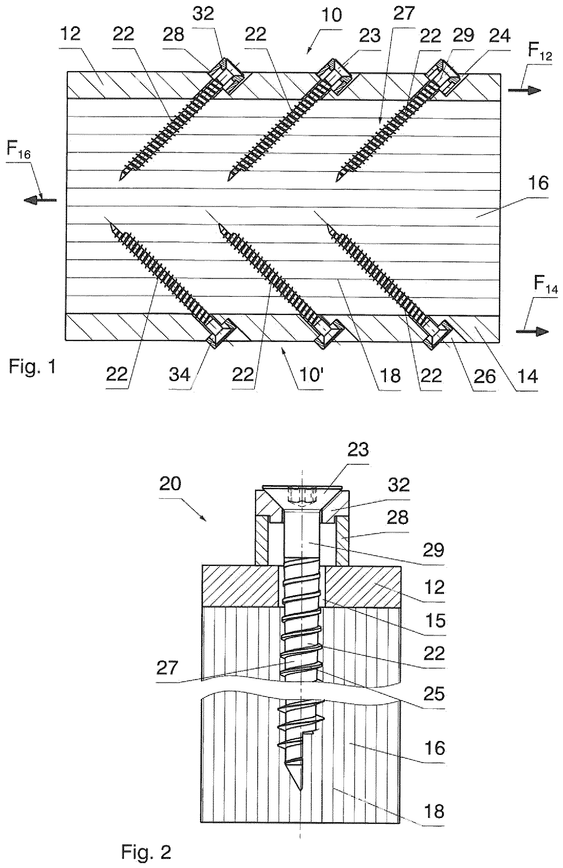

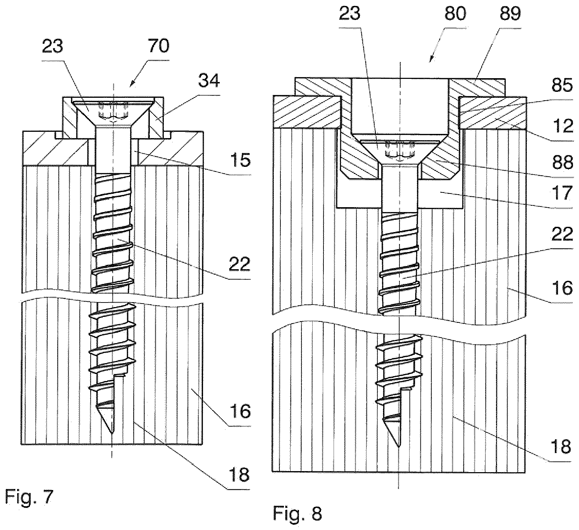

Fig. 1 zeigt in einer Längsschnittansicht ein Ausführungsbeispiel der Erfindung, bei dem zwei Bauteile 12, 14 mit einem Unterbau 16 aus Holz mit sich in Längsrichtung erstreckender Faserrichtung 18, die durch eine parallele Schraffierung des Unterbaus 16 angedeutet ist, zwei insgesamt mit 10 bzw. 10' bezeichnete Verbindungen aus jeweils drei Schrauben 22 haben. Die beiden Verbindungen 10, 10' sind spiegelbildlich zueinander angeordnet. In beiden Verbindungen werden die Schrauben 22 auf Zug und Scherung beansprucht, wenn auf die Bauteile 12, 14 Zugkräfte F₁₂ bzw. F₁₄ einwirken und auf den Unterbau 16 eine Zugkraft F₁₆ einwirkt. In den Bauteilen 12, 14 sind Senkungen 24 bzw. 26 vorhanden, welche wie die Schrauben 22 in dem gezeigten Ausführungsbeispiel unter 45° gegen die Faserrichtung 18 ausgerichtet sind. In der Verbindung 10 stützt sich jede Schraube 22 über eine metallische Hülse 28 und eine metallische Zwischenscheibe 32 auf dem Grund der Senkung 24 ab. In der Verbindung 10' stützt sich jede Schraube 22' auf dem Grund der Senkung 26 direkt über eine metallische Hülse 34 ab. Der Aufbau der Verbindungen 10 und 10' ist weiter unten unter Bezugnahme auf die Darstellungen in den Fig. 2 bzw. 7 noch näher beschrieben.

Die Schrauben 22 der Verbindung 10 sind jeweils parallel zueinander angeordnet. Ebenso sind die Schrauben 22 der Verbindung 10' parallel zueinander angeordnet. Die Hülse 28 und die Zwischenscheibe 32 einerseits und die Hülse 34 andererseits bilden in der Verbindung 10 ein Stützelement, mit dem sich jede Schraube 22 in einem Bereich unterhalb ihres Kopfes 23, bei dem es sich in dem hier beschriebenen Ausführungsbeispiel jeweils um einen flachen Senkkopf handelt, auf dem Bauteil 12 abstützt. In der Verbindung 10' stützt sich jede Schraube 22 in einem Bereich unterhalb des Kopfes 23 auf dem Bauteil 14 durch ein Stützelement ab, welches durch die Hülse 34 gebildet ist. Durch das Stützelement wird die Schraube 22 bei der Herstellung der Verbindung geführt und schließlich über die Hülse 34 auf dem Bauteil abgestützt. Das Stützelement ist außerdem so ausgebildet, dass es der Verbindung 10, 10' mindestens nach deren Herstellung Duktilität verleiht. Auch das ist im Folgenden noch näher beschrieben.

Jede Schraube 22 hat außer dem Kopf 23 einen mit einem Gewinde 25 und einem gewindefreien Schaftabschnitt 29 versehenen Schaft 27. Bei der Verbindung 10, die in dem ersten Ausführungsbeispiel in Fig. 1 gezeigt ist, ist die oder jede Schraube 22 so ausgebildet, dass die Verbindung 10 versagt, wenn die oder jede Schraube 22 ihre Bruchverformung erreicht. Das Verhalten der Verbindung sei anhand von Fig. 16 vorab kurz erläutert, welche eine ideale Kennlinie für einen Tragwiderstand F in Abhängigkeit von seiner Verformung w zeigt. Zusätzlich dazu wird nun beispielshalber auf Fig. 2 Bezug genommen.

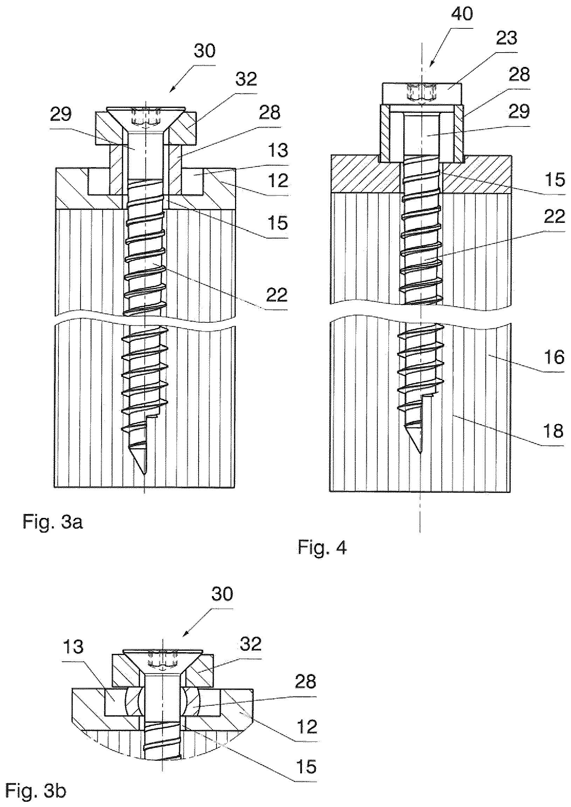

Fig. 2 zeigt eine Verbindung, die insgesamt mit 20 bezeichnet ist. Bei der Verbindung 20 ist wie bei der Verbindung 10 das Stützelement eine metallische, durch das Anziehen der Schraube 22 elastisch verformbare und später durch Überlastung plastisch verformbare Hülse 28, auf der sich der Schraubenkopf 23 über eine metallische Zwischenscheibe 32 abstützt. Die plastische Verformung der Hülse 28 kann so erfolgen, wie es in Fig. 3b gezeigt ist, also durch Ausbauchen und Längenreduzierung der Hülse 28. Die Hülse 28 könnte aber statt ausgebaucht auch zusammengedrückt werden. Das ist von dem verwendeten Material der Hülse 28 abhängig. Bei Verwendung des bereits erwähnten Materials Aluminium- oder Aluminiummagnesiumlegierung ergibt sich ein plastisches Verformungsverhalten der Hülse 28 wie in Fig. 3b. Wenn für die Hülse 28 ein anderes Material verwendet wird, wie z.B. Kupfer oder Blei oder eine Legierung aus einem oder beiden dieser Metalle, wird die Hülse 28 bei entsprechender Druckbeanspruchung einfach zusammenquetscht werden. Die Hülse 28 stützt sich oben an einem Einstich an der Zwischenscheibe 32 ab.

Wenn in Fig. 16 die Beanspruchung der Verbindung erhöht wird, also der Tragwiderstand F ansteigt, findet bis zu der Anzugskraft F_{A} die im Wesentlichen elastische Verformung der Hülse 28 und somit der Verbindung 20 nach Fig. 2 statt. Ein Bereich elastischer Verformung EB erstreckt sich bis zu einer Verformung w_{y}. Ab dem Wert w_{y} beginnt die Hülse 28, sich plastisch zu verformen, d.h. ihr Material beginnt zu fließen. In einem duktilen Bereich DB, der sich bis zu der Bruchverformung wᵤ erstreckt, bleibt die Beanspruchung oder der Tragwiderstand F im Wesentlichen konstant. Das ist ein idealisiertes Verhalten, das angestrebt wird. Den wahren Verlauf der Kennlinie zeigen die Fig. 14 und 15, welche die Ergebnisse von Versuchen wiedergeben. Der duktile Bereich DB ist durch irreversible Verformungen der Hülse 28 und später der Schraube 22 selbst gekennzeichnet. Die Verbindung hat in diesem Bereich ein plastisches Verformungsvermögen hauptsächlich auf Grund der Hülse 28. Durch das plastische Verformungsvermögen wird die Beanspruchung eines Tragwerks begrenzt. Spröde Elemente des Tragwerks, die elastisch bleiben, werden nicht überbeansprucht. Der Grund dafür ist, dass die Verbindung mit der Hülse 28 ein duktiles Glied enthält, welches von allen Gliedern der Verbindung den geringsten Tragwiderstand, aber das größte Verformungsvermögen aufweist. Durch entsprechendes Dimensionieren und entsprechende Wahl des Materials der Hülse 28 ergibt sich ein duktiles Gesamtsystem, welches im Holzbau angestrebt wird, um die Sprödigkeit des Materials Holz zu kompensieren.

Nach Fig. 16 versagt die Verbindung, sobald sie ihre Bruchdehnung wᵤ erreicht. Das ist aber, wie gesagt, ein idealisiertes Verhalten. Die Diagramme nach den Fig. 14 und 15 zeigen, dass es am Ende, wenn die plastische Verformung der Verbindung, insbesondere der Hülse 28 aufhört, zu einem Anstieg der Auszugskraft auf Grund einer Verformung der Schraube 22 kommt. Die Schraube 22 ist so ausgebildet, dass die Verbindung 20 versagt, wenn die Schraube(n) durch Überlastung der Verbindung ihre Bruchverformung wᵤ erreicht (erreichen). Die Versuchswerte, die in den Fig. 14 und 15 gezeigt sind, lassen erkennen, dass die Auszugskraft mit der Anzahl der Befestigungspunkte zu multiplizieren ist. Fig. 14 betrifft den Fall einer Ein-Punkt-Befestigung, also einer Befestigung mit einer einzelnen Schraube. Fig. 15 betrifft den Fall einer 3-Punkt-Befestigung, also einer Befestigung mit drei Schrauben. Es ist zu erkennen, dass die mit einer 3-Punkt-Befestigung nach Fig. 15 erreichten Kräfte den dreifachen Wert gegenüber den mit einer Ein-Punkt-Befestigung nach Fig. 14 erzielten Kräften haben.

Die Verbindung hat ein steifes Verhalten bei geringem Lastniveau (30 % - 50 %) und ein duktiles Verhalten bei hohem Lastniveau (100 %), wobei Lastniveau hier die maximal aufzunehmende Kraft der Verbindung bedeuten soll, welche üblicherweise aus mehreren Ein-Punkt-Befestigungen besteht.

In Fig. 2 stützt sich die Hülse 28 auf der Oberseite des Bauteils 12 ab, bei dem es sich um irgendeine metallische Anschlussplatte, um eine metallische Zuglasche od. dgl. handeln kann. Grundsätzlich braucht das Metall nicht Stahl zu sein. Bei der Verbindung 20 handelt es sich um eine Stirnholzverbindung, was daran zu erkennen ist, dass sich die Faserrichtung 18 des den Unterbau 16 bildenden Holzes parallel zur Mittelachse der Schraube 22 und der Hülse 28 erstreckt. Entsprechendes gilt für die im Folgenden beschriebenen übrigen Ausführungsbeispiele.

Die Fig. 3a und 3b zeigen eine Verbindung, die insgesamt mit 30 bezeichnet ist. In den Fig. 3a, 3b stützt sich die Hülse 28 auf dem Bauteil 12 in einer Senkung 13 desselben ab. Das Bauteil 12 hat eine Durchgangsbohrung 15, durch die sich die Schraube 22 erstreckt. Bei der Verbindung 30 hat die Zwischenscheibe 32 an ihrer Unterseite eine ebene Fläche, mit der sie auf der oberen Stirnseite der Hülse 28 aufliegt. Der Durchmesser der Senkung 13 ist wesentlich größer als der Außendurchmesser der Hülse 28. Der Innendurchmesser der Hülse 28 entspricht hier dem Durchmesser der Durchgangsbohrung 15. Hingegen ist bei der Verbindung 20 nach Fig. 2 der Innendurchmesser der Hülse 28 wesentlich größer als der Durchmesser der Durchgangsbohrung 15. Bei der Verbindung 30 braucht die Zwischenscheibe 32 deshalb an ihrer Unterseite keinen Einstich zu haben, um die Hülse 28 aufnehmen und führen zu können. Das besorgt bei der Verbindung 30 die Schraube 22 selbst.

Fig. 4 zeigt eine Verbindung, die insgesamt mit 40 bezeichnet ist. Die Hülse 28 hat etwa den Aufbau wie bei der Verbindung 20 nach Fig. 2, stützt sich mit ihrer oberen Stirnseite aber nicht an einer Zwischenscheibe ab, sondern direkt an dem Schraubenkopf 23. Der Kopf 23 ist zu diesem Zweck mit einem Einstich zur Aufnahme des oberen Endes der Hülse 28 versehen, der bei der Verbindung 20 nach Fig. 2 an der Unterseite der Zwischenscheibe 32 vorhanden ist. Mit ihrem unteren Ende stützt sich die Hülse 28 bei der Verbindung 40 in einer Senkung 13 des Bauteils 15 ab. Die Senkung 13 hat bei der Verbindung 40 einen Durchmesser, der im Wesentlichen dem Außendurchmesser der Hülse 28 entspricht, und eine wesentlich geringere Tiefe als die Senkung 13 bei der Verbindung 30. Außerdem hat bei der Verbindung 40 nach Fig. 4 die Hülse 28 eine wesentlich geringere Wandstärke als die Hülse 28 bei der Verbindung 30 nach Fig. 3a. Die gewählten geometrischen Abmessungen ergeben in Verbindung mit dem für die Hülse 28 gewählten Material bei Belastung der Verbindung den angestrebten Verlauf des Tragwiderstandes F in Abhängigkeit von der Verformung w gemäß Fig. 16, wobei der tatsächliche Verlauf der Kennlinie dem in Fig. 16 gezeigten idealisierten Verlauf derselben möglichst nahekommen sollte. Die Darstellungen in den Fig. 14 und 15, die die Ergebnisse von mit einer Verbindung durchgeführten Belastungsversuchen zeigen, lassen erkennen, dass der ideale Verlauf praktisch tatsächlich erreicht wird.

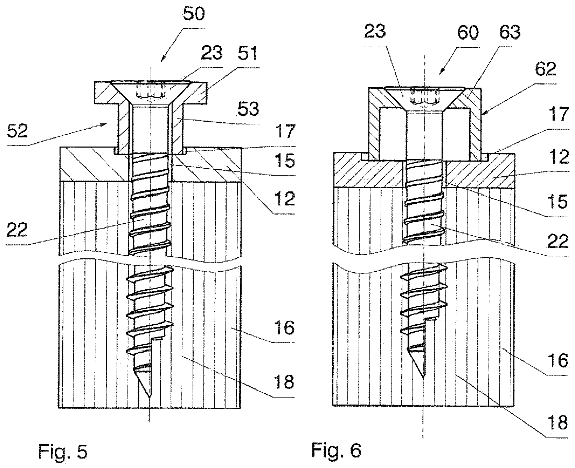

Fig. 5 zeigt eine Verbindung, die insgesamt mit 50 bezeichnet ist. Die Verbindung 50 stellt eine Kombination der Verbindungen 30 und 40 dar. Die Hülse 28 und die Zwischenscheibe 32 bilden bei der Verbindung 50 nach Fig. 5 eine einteilige Bundhülse, die einen Bund 51 und einen zylindrischen Mantel 53 aufweist. Die Bundhülse 52 stützt sich in einer Senkung 17 des Bauteils 12 ab, die eine geringe Tiefe aufweist und einen Innendurchmesser hat, der etwas größer als der Außendurchmesser des Mantels 53 ist. Der Bund 51 hat oben eine konische Senkung für den Schraubenkopf 23.

Fig. 6 zeigt eine Verbindung, die insgesamt mit 60 bezeichnet ist. Die Hülse 28 ist hier durch eine Topfhülse 62 ersetzt. Die Topfhülse 62 hat einen dicken Boden 63 mit einer konischen Senkung zur Aufnahme des Senkkopfes 23 der Schraube 22. Die Topfhülse 62 stützt sich in einer Senkung 17 auf dem Bauteil 12 ab, die im Wesentlichen wie bei der Verbindung 50 ausgebildet, im Durchmesser aber wesentlich größer ist.

Den Ausführungsbeispielen nach den Fig. 1 - 6 ist gemeinsam, dass die als Stützelement jeweils zwischen dem Schraubenkopf 23 und dem Bauteil 12 angeordnete Hülse 28 über den Schraubenkopf 23 direkt wie in den Fig. 4 - 6 oder indirekt wie in den Fig. 2 und 3a über die Zwischenscheibe 32 auf Druck beansprucht wird, um die Hülse 28 bei dem Anziehen der Schraube 22 elastisch und dann bei Belastung duktil oder plastisch zu verformen, wie es oben beschrieben worden ist.

Fig. 7 zeigt eine Verbindung, die insgesamt mit 70 bezeichnet ist. Der Schraubenkopf 23 ist so versenkt in der Hülse 34 angeordnet, dass diese auf Zug beansprucht wird und sich aufzuweiten beginnt, wenn die Schraube 22 ausgehend von der in Fig. 7 gezeigten Position etwas weiter in den Unterbau 16 hineingedreht oder die Verbindung belastet wird.

Fig. 8 zeigt eine Verbindung, die insgesamt mit 80 bezeichnet ist. Auch in diesem Fall wird die Hülse bei dem Anziehen der Schraube 22 und dann bei Belastung der Verbindung auf Zug beansprucht. Die Hülse ist hier eine topfförmige Bundhülse 88. Die Durchgangsbohrung in dem Bauteil 12 ist hier durch eine kreisrunde Öffnung 85 mit wesentlich größerem Durchmesser ersetzt, an die sich eine entsprechende, mit noch einem etwas größeren Durchmesser versehene, als ein Sackloch ausgebildete Öffnung 17 in dem Unterbau 16 anschließt. Die Bundhülse 88 ist mit einem dicken Boden versehen, der eine Senkung für den Senkkopf 23 der Schraube 22 aufweist. Die Bundhülse 88 ist mit einem breiten Bund 89 versehen, mit dem sie um die Öffnung 85 auf der Oberseite des Bauteils 12 aufliegt, während sich der übrige Teil der Bundhülse 88 durch die Öffnung 85 und in die Öffnung 17 erstreckt, wie in Fig. 8 dargestellt. Durch die Zugbeanspruchung bei dem Anziehen der Schraube 22 und die spätere Belastung der Verbindung wird die Bundhülse 88 zunehmend in die Öffnung 17 des Unterbaus 16 hineingezogen und zunächst elastisch und dann plastisch verformt. Der Tragwiderstand, der dabei erzeugt wird, verläuft in Abhängigkeit von der Verformung so, wie es in Fig. 16 dargestellt ist. Am Ende wird sich mit der durch Belastung verursachten Verformung der Schraube 22 noch eine Kraftspitze ergeben, bevor die Verbindung endgültig versagt, wie es in den Fig. 14 und 15 gezeigt ist.

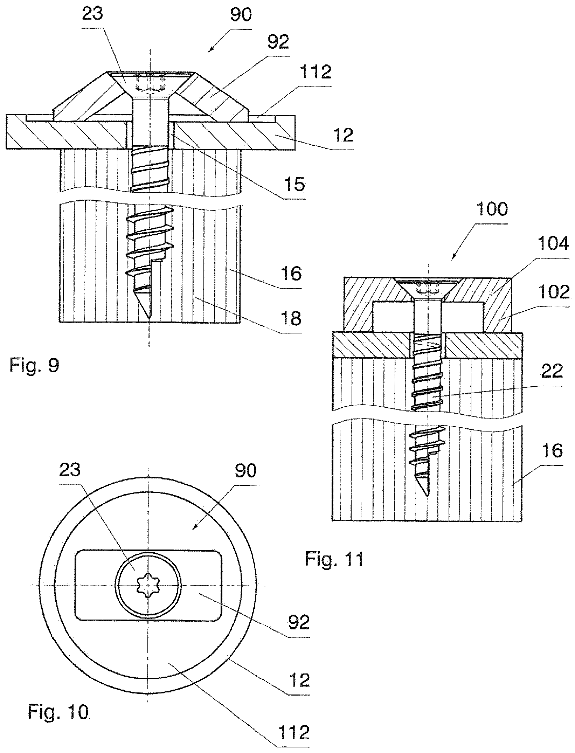

Die vorstehend beschriebenen Ausführungsbeispiele nach den Fig. 1 - 6, d.h. die Verbindungen 10, 10' und 20 - 60 basieren auf Druckbeanspruchung der Koppeleinrichtung, wohingegen die Ausführungsbeispiele nach den Fig. 7 und 8, d.h. die Verbindungen 70 und 80, auf Zugbeanspruchung basieren. Die Fig. 9 - 11 zeigen zwei Verbindungen, die auf Biegung basieren und nun beschrieben werden.

Fig. 9 zeigt eine Verbindung, die insgesamt mit 90 bezeichnet ist. Fig. 9 zeigt die Verbindung 90 in einer Längsschnittansicht. Fig. 10 zeigt die Verbindung 90 in einer Draufsicht. Bei der Verbindung 90 ist das Stützelement als eine rechteckige Tellerscheibe 92 ausgebildet, also als eine konische Scheibe, die im Scheitel des Konus den Schraubenkopf 23 aufnimmt. Das auf dem Unterbau 16 zu befestigende Bauteil 12 ist als eine kreisförmige Scheibe mit einer kreisförmigen Senkung 112 ausgebildet. Bei dem Herstellen der Verbindung 90 wird mit zunehmendem Einschrauben der Schraube 22 in den Unterbau 16 die Tellerscheibe 92 (die auch kreisförmig ausgebildet sein könnte) mit einer zunehmenden Zugkraft beaufschlagt und im elastischen Bereich verformt, wodurch die Tellerscheibe 92 eine etwas flachere Form annimmt. Bei zunehmender Belastung der Verbindung ergibt sich wiederum ein Tragwiderstand mit dem Verlauf nach den Fig. 14 - 16, wie vorstehend beschrieben.

Fig. 11 zeigt eine Verbindung, die insgesamt mit 100 bezeichnet ist. Das Stützelement oder die Hülse ist hier eine Topfhülse 102, die ähnlich wie die Topfhülse 62 der Verbindung 60 aufgebaut ist. Die Topfhülse 102 hat aber einen größeren Durchmesser und im Mantelbereich eine dickere Wand, so dass bei dem Herstellen der Verbindung 100 ein ebenso dick wie die mantelförmige Wand ausgebildeter Topfboden 104 durch das zunehmende Einschrauben der Schraube 22 in den Unterbau 16 im elastischen Bereich etwas einwärts vertieft wird. Bei Belastung der Verbindung hat der Tragwiderstand in Abhängigkeit von der duktilen Verformung dann den in den Fig. 14 - 16 dargestellten Verlauf. Die Topfhülse 102 wird dabei auf Biegung beansprucht wie die Tellerscheibe 92 der Verbindung 90.

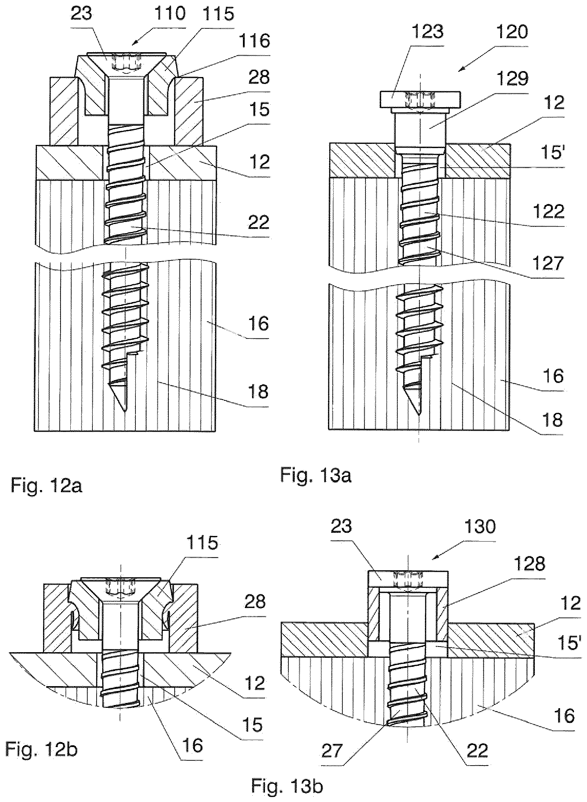

Die Fig. 12a und 12b zeigen in einer Längsschnittansicht bzw. in Draufsicht eine Verbindung, die insgesamt mit 110 bezeichnet ist. Die Fig. 12a und 12b zeigen die Verbindung 110 am Anfang des Herstellens der Verbindung bzw. während des Herstellens oder nach dem Herstellen der Verbindung 110. Das als Hülse ausgebildete Stützelement ist in diesem Fall eine zwischen dem Kopf 23 und einer dickwandigen Hülse 28 angeordnete, im Querschnitt kreisförmige Zwischenhülse 115, die wie ein Räumwerkzeug ausgebildet ist. Durch das Anziehen der Schraube 22 wird die Zwischenhülse 115 in die Hülse 28 eingesenkt. Mit zunehmender Belastung der Verbindung wird dann die Hülse 28 weiter eingesenkt und dadurch zerspant. Zu diesem Zweck hat der untere Teil der Zwischenhülse 115 einen kleineren Durchmesser als der obere Teil der Zwischenhülse 115. An dem Übergang zwischen den beiden Teilen ist eine sich umfangsmäßig erstreckende, scharfe Schneide 116 gebildet, die sich in dieser Ausgestaltung über den gesamten Umfang erstreckt. Mit dem Einsenken der Zwischenhülse 115 in die Hülse 28 wird letztere an ihrer Innenwand zunehmend zerspant. Der Zerspanungsvorgang ist in Fig. 12b zu erkennen.

Die Fig. 13a und 13b zeigen weitere Ausführungsbeispiele von Verbindungen, die insgesamt mit 120 bzw. 130 bezeichnet sind. Bei den Verbindungen 120 und 130 handelt es sich jeweils um eine Presspassungsverbindung.

Bei der Verbindung 120 nach Fig. 13a ist das Stützelementgebildet durch einen gewindefreien Schaftabschnitt 129 unterhalb eines Kopfes 123 einer Schraube 122 und durch eine Durchgangsbohrung 15' des Bauteils 12, deren Innendurchmesser so auf den Außendurchmesser des gewindefreien Schaftabschnittes 129 abgestimmt ist, dass der gewindefreie Schaftabschnitt mit wenigstens einem Teil seiner Länge und mit einer Presspassung in der Durchgangsbohrung 15' angeordnet ist. Zusätzlich wird dabei selbstverständlich der Reibbeiwert zwischen dem gewindefreien Schaftabschnitt und der Durchgangsbohrung 15' entsprechend gewählt, so dass sich durch das Herstellen der Verbindung und durch anschließende Belastung derselben insgesamt wiederum ein Verlauf des Tragwiderstandes über der Verformung ergibt, wie er in den Fig. 14 - 16 gezeigt ist. Die Schraube 122 hat in diesem Fall zweckmäßig einen Flachkopf.

Bei der Verbindung 130 ist die Funktion des gewindefreien Schaftabschnittes 129 der Verbindung 120 durch eine Hülse 128 ersetzt. Der Außendurchmesser der Hülse 128 ist auf den Innendurchmesser der Durchgangsbohrung 15' des Bauteils 12 abgestimmt. Ansonsten hat das Stützelement eine Form etwa wie bei der Verbindung 40 nach Fig. 4. Der Kopf 123 hat an seiner Unterseite einen Einstich, in welchem er das obere Ende der Hülse 128 formschlüssig aufnimmt. Auch bei der Verbindung 30 wird der Reibbeiwert zwischen der Hülse 128 und der Bohrung 15' ausgenutzt. Durch Einschrauben der Schraube 122 in den Unterbau 16 und durch anschließendes Belasten der Verbindung 130 ergibt sich bei dieser Verbindung ebenso wie bei der Verbindung 120 ein Verlauf des Tragwiderstandes über der Verformung, wie er in den Fig. 14 - 16 dargestellt ist.

Fig. 1 zeigt einen Unterbau 16, an dem oben und unten ein Bauteil 12 bzw. 14 durch eine Verbindung 10 bzw. 10' befestigt ist. Die Schraubenanordnung in der Verbindung 10' ist gegenüber der Schraubenanordnung in der Verbindung 10 um die Faserrichtung 18 gespiegelt. Der Unterbau könnte auch aus zwei stirnseitig aneinander anliegenden Unterbauelementen (nicht dargestellt) bestehen, die dann oben und/oder unten durch eine Verbindung 10 bzw. 10' miteinander verbunden sein könnten. Auch in diesem Fall könnte der Winkel der Schrauben in der Verbindung 10' in einer anderen Richtung (z.B. gespiegelt) als in der Verbindung 10 angeordnet sein.

Auch bei den Ausführungsbeispielen nach den Fig. 12a, 12b und 13a, 13b, bei denen mit Zerspanung bzw. einer Presspassungsverbindung gearbeitet wird, besteht das Stützelement wiederum vorzugsweise aus einem Material wie Aluminium- oder Aluminiummagnesiumlegierung.

Spröde Versagensarten, so genannte "verformungslose" Brüche, sind generell bei allen Bauweisen unerwünscht (vgl. die eingangs erwähnte Literaturstelle "Holzwerkstoffe auf Furnierbasis", Seite 39, Abschnitt 1.4, erster Satz). Die Verbindung verhindert verformungslose Brüche, weil sie ein duktiles Verhalten zumindest kurz vor dem Versagensfall aufweist. Es ergibt sich ein Kraftverlauf, wie er in den hier beigefügten Fig. 14 und 15 gezeigt ist, was mit dem Vorteil verbunden ist, dass diese Versagensart berechenbarer ist als ein Ausreißen der Verbindung zwischen dem Unterbau und der Schraube, wie oben ebenfalls bereits erwähnt.

### Bezugszeichenliste

- 10: Verbindung
- 12: Bauteil
- 13: Senkung
- 14: Bauteil
- 15: Durchgangsbohrung
- 15': Durchgangsbohrung
- 16: Unterbau
- 17: Öffnung
- 18: Faserrichtung
- 20: Verbindung
- 22: Schraube
- 22': Schraube
- 23: Kopf
- 24: Senkung
- 25: Gewinde
- 26: Senkung
- 27: Schaft
- 28: Hülse
- 29: gewindefreier Schaftabschnitt
- 30: Verbindung
- 32: Zwischenscheibe
- 34: Hülse
- 40: Verbindung
- 50: Verbindung
- 51: Bund
- 52: Bundhülse
- 53: Mantel
- 60: Verbindung
- 62: Topfhülse
- 63: Boden
- 70: Verbindung
- 80: Verbindung
- 85: Öffnung
- 88: Bundhülse
- 89: Rand
- 90: Verbindung
- 92: Tellerscheibe
- 100: Verbindung
- 102: Topfhülse
- 104: Topfboden
- 110: Verbindung
- 112: Senkung
- 115: Zwischenhülse
- 116: Schneide
- 120: Verbindung
- 122: Schraube
- 123: Kopf
- 127: Schaft
- 128: Hülse
- 129: gewindefreier Schaftabschnitt
- 130: Verbindung

- DB: duktiler Bereich
- EB: elastischer Bereich
- F: Tragwiderstand
- F_{A}: Anzugskraft
- F₁₂: Zugkraft
- F₁₄: Zugkraft
- F₁₆: Zugkraft
- w: Verformung
- w_{y}: elastische Verformung
- wᵤ: Bruchverformung

## Patentansprüche

1. Verbindung von mindestens einem Bauteil (12, 14) aus Stahl mit einem Unterbau (16) aus Holz, wobei die Verbindung aus mehreren Verbindungselementen besteht, welche Schrauben (22, 122) umfassen, die jeweils einen Kopf (23, 123) und einen mit Gewinde (25, 125) versehenen Schaft (27, 127) aufweisen, wobei die Schrauben (22) parallel zueinander jeweils in einer Lage und jeweils einem gleichen Winkel von bis zu 45° zur Faserrichtung so angeordnet sind, dass sie bei Zugbeanspruchung des Bauteils (12, 14) auf Zug und Scherung beansprucht werden, wobei als die Schrauben führende Hülsen (28) ausgebildete Stützelemente zum Abstützen jeder Schraube (22, 122) in einem Bereich unterhalb des Kopfes (23, 123) an dem Bauteil (12, 14) vorgesehen sind, **dadurch gekennzeichnet, dass** sich das Stützelement bei niedrigem Lastniveau steif verhält und elastisch verformt, sich aber dann mit zunehmendem Lastniveau bis kurz unterhalb einer Bruchlast der Schraube plastisch verformt, wobei die Hülse (28) das Glied der Verbindung ist, welche von allen Gliedern der Verbindung den geringsten Tragwiderstand und das größte Verformungsvermögen aufweist.

2. Verbindung nach einem der vorhergehenden Ansprüche, **dadurch gekennzeichnet, dass** das als Hülse (28) ausgebildete Stützelement aus einer Aluminium- oder Aluminiummagnesiumlegierung besteht und sich der Schraubenkopf (23) direkt oder über eine metallische Zwischenscheibe (32) oder -hülse (115, 128) abstützt.

3. Verbindung nach einem der Ansprüche 1-2, **dadurch gekennzeichnet, dass** das Gewinde (25, 125) ein Holzschraubengewinde ist.

4. Verbindung nach einem der Ansprüche 1-3, **dadurch gekennzeichnet, dass** die Schrauben (22) zur Faserrichtung (18) und/oder in einer anderen, z. B. gespiegelten Lage angeordnet sind.

## Claims

1. A connection of at least one component (12, 14) made of steel to a substructure (16) made of wood, the connection consisting of a plurality of connection elements which comprise screws (22, 122) which each have a head (23, 123) and a shank (27, 127) provided with a thread (25, 125), the screws (22) being arranged parallel to each other, each in the same position and at the same angle of up to 45° to the grain direction, such that they are placed under tensile and shear loading when the component (12, 14) is placed under tensile loading, supporting elements in the form of sleeves (28) which guide the screws being provided to support each screw (22, 122) on the component (12, 14) in a region under the head (23, 123), **characterised in that** the supporting element behaves stiffly and deforms elastically at a low load level but deforms plastically with an increasing load level until just below a breaking load of the screw, wherein the sleeve (28) is the member of the connection which has the least resistance and the greatest deformability of all the members of the connection.

2. The connection according to any one of the preceding claims, **characterised in that** the supporting element in the form of the sleeve (28) consists of an aluminium alloy or aluminium magnesium alloy, and the screw head (23) is supported directly or via a metallic washer (32) or intermediate sleeve (115, 128).

3. The connection according to any one of Claims 1-2, **characterised in that** the thread (25, 125) is a wood screw thread.

4. The connection according to any one of Claims 1-3, **characterised in that** the screws (22) are arranged relative to the grain direction (18) and/or in another, e.g. mirrored, position.

## Revendications

1. Assemblage d'au moins un élément de construction (12, 14) en acier à une infrastructure (16) en bois, l'assemblage étant composé de plusieurs éléments de liaison, lesquels comprennent des vis (22, 122), qui comportent respectivement une tête (23, 123) et une tige (27, 127) dotée d'un filetage (25, 125), les vis (22) étant respectivement disposées parallèlement les unes aux autres dans une position et respectivement dans un même angle allant jusqu'à 45° en direction des fibres de telle sorte qu'elles sont sollicitées lors de la contrainte de traction de l'élément de construction (12, 14) en traction et en cisaillement, des éléments de support constitués en tant que manchons (28) guidant les vis pour soutenir chaque vis (22, 122) étant prévus dans une zone en dessous de la tête (23, 123) sur l'élément de construction (12, 14), **caractérisé en ce que** l'élément de support se comporte de façon rigide et se déforme élastiquement à un faible niveau de charge, mais se déforme plastiquement ensuite avec un niveau de charge croissant juste jusqu'en dessous d'une charge de rupture de la vis, le manchon (28) constituant l'élément de l'assemblage, lequel comporte la résistance portante la plus faible et la capacité de déformation maximale de tous les éléments de l'assemblage.

2. Assemblage selon l'une quelconque des revendications précédentes, **caractérisé en ce que** l'élément de support constitué comme manchon (28) est composé d'un alliage d'aluminium ou alliage aluminium-magnésium et la tête de vis (23) appuie directement ou par le biais d'une rondelle (32) ou manchon (115, 128) intermédiaire métallique.

3. Assemblage selon l'une quelconque des revendications 1-2, **caractérisé en ce que** le filetage (25, 125) est un filetage pour vis à bois.

4. Assemblage selon l'une quelconque des revendications 1-3, **caractérisé en ce que** les vis (22) sont disposées par rapport à la direction des fibres (18) et/ou dans une autre position, par ex. : en miroir.
